Europäisches Patentamt

European Patent Office

Office européen des brevets

(19)

(11) Publication number: **0 005 578**
**B1**

## EUROPEAN PATENT SPECIFICATION

(45) Date of publication of patent specification: **20.01.82**

(51) Int. Cl.³: **B 60 F 1/00**

(21) Application number: **79200241.2**

(22) Date of filing: **18.05.79**

(54) Wagon capable of traveling on a railway and on the ground.

(30) Priority: **24.05.78 NL 7805636**

(43) Date of publication of application:
**28.11.79 Bulletin 79/24**

(45) Publication of the grant of the European patent:
**20.01.82 Bulletin 82/3**

(84) Designated Contracting States:
**DE FR GB IT NL**

(56) References cited:
**DE - B - 1 128 456**
**FR - A - 585 779**
**FR - A - 1 171 550**

(73) Proprietor: SKF Nederland B.V.
P.O. Box 37 Wageningselaan 2
NL-3900 AA Veenendaal (NL)

(72) Inventor: Timmer, Hendrikus Jacobus Maria
Dr.Hoogenboomlaan 4
Tiel (NL)

(74) Representative: Merkelbach, B.
SKF Engineering & Research Centre B.V. P.O. Box
50 Plettenburgerweg 6A
NL-3430 AB Nieuwegein (NL)

Courier Press, Leamington Spa, England.

Wagon capable of traveling on a railway and on the ground

The invention relates to a wagon capable of traveling on a railway and on the ground, consisting of a chassis on which, near the front and rear ends, wheels are mounted for traveling on a railway, and parallel thereto, wheels for traveling on the ground.

Wagons of this type may be used in operations where it is necessary or desirable to transport goods or products by a railway and then on the ground or vice versa, such as described in the French patent 585.779 or French patent 1.171.550.

The invention particularly relates to wagons that are suitable for gardening purposes where products are grown over large areas and must be transported over uneven grounds at long distances, while the avenues of transport must occupy as little space as possible and require frequent re-routing. The object of the invention is to provide a wagon of the kind mentioned, which is simple in construction and highly maneuverable, both as a rail car particularly on a so-called mono-rail and in traveling on the ground.

This object is accomplished since in the wagon according to the invention, the wheels are mounted on trucks, the wheels for traveling on the ground being offset from the pivot of the truck in a direction perpendicular to the axles of the wheels, the wheels for traveling on a railway being mounted in a fork attached to the truck near one end thereof and being pivotably attached at a pivot to a truck and swingable about said pivot as the weight of the wagon is transferred from the rail-wheels to the road-wheels, the other end of said fork being connected to a locking means which, as the said fork swings upwardly, is capable of entering into engagement with at least one receiving member attached to the chassis, so that the truck may be fixed in one or more positions relative to said chassis.

Because the wheels are mounted in trucks, the wagon can readily negotiate sharp curves in the railway, and because the ground wheels are offset from the pivot of the truck, a sort of swivel is formed, so that in traveling on the ground, the swivels will always caster to the rear in relation to the direction of travel, while at least one of the trucks is locked because the linkages are so swung by the weight of the rail wheels, now hanging clear, that the locking means are moved into the position in which they can enter into engagement with the corresponding receiving members.

Preferably each receiving member is so arranged that the corresponding locking means can enter into engagement with it when the corresponding ground wheels are directed inward in relation to the pivot of the truck. In this way, in the direction of travel, the front truck is locked while the rear truck remains free to swing in traveling on the ground.

Between the linkage and the truck, a spring may be arranged, causing the linkage to swing in the direction in which the locking means can enter into engagement with the receiving member.

Preferably the locking means consists of a bolt and the receiving member of an opening capable of receiving the bolt.

If it is desired to provide means of releasing a locked truck, the opening may be arranged in a member mounted on the chassis and capable of swinging upward.

Preferably only one rail wheel is mounted in each truck, with a ground wheel on either side of it, so that a monorail car is obtained.

The rail wheel may then have a concave thread, so that pipe can be used for the rail, for example a plastic pipe, possibly flexible, conveniently laid loose on the ground. Near the top of the rail wheel, a plate may be fixed to the chassis, projecting into the tread outline with some clearance. Such a plate will keep the rail wheel clean so that it will follow the rail dependably.

The invention will now be illustrated in more detail with reference to the drawing, in which

Fig. 1 shows a wagon according to the invention in side view,

Fig. 2 shows a side view, to a larger scale, of one of the trucks of the wagon according to Fig. 1, with the wheels omitted for the sake of clarity,

Fig. 3 shows a section at the line III—III in Fig. 2, and

Fig. 4 shows a section at the line IV—IV in Fig. 3.

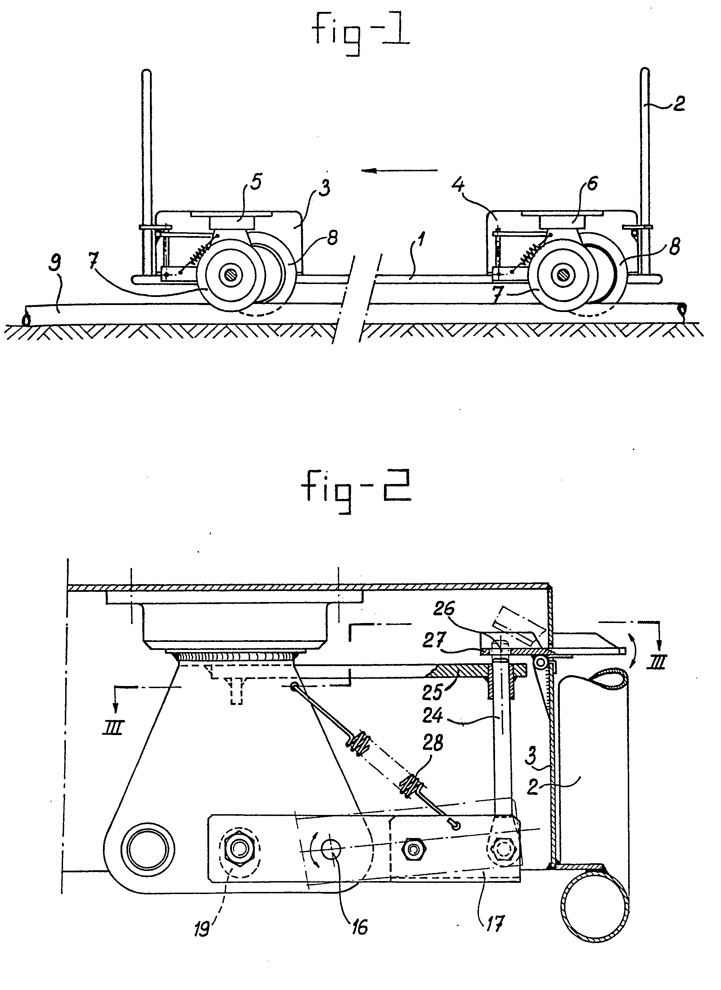

As shown in Fig. 1, the wagon comprises a chassis 1 with some sort of superstructure 2. To the chassis 1, at the front and rear ends of the car, box-like housings 3 and 4 are mounted, a truck 5 and 6 being arranged rotatable on a vertical axis in each housing. Each truck comprises a rail wheel 7 and two ground wheels 8 placed on either side of it. As shown in Fig. 1, the rail wheels 7 of the wagon are resting on a single rail 9 consisting of pipe, so that the wagon can be propelled along the rail. At one end of the single rail 9, the wagon can be run off the rail, whereupon the ground wheels 8 come into contact with the ground and the wagon can travel over the ground on the ground wheels 8. Since, as shown in Fig. 1, the ground wheels 8 are offset relative to the pivots of the trucks 5 and 6 respectively, the ground wheels 8 will always swing into the position shown in Fig. 1 relative to the direction of travel, which is to the left in the figure. Then, by means more specifically described below, the front truck 5 is automatically locked, while the rear truck 6 remains freely pivoted, so that the wagon will be duly movable and maneuverable in traveling on the ground.

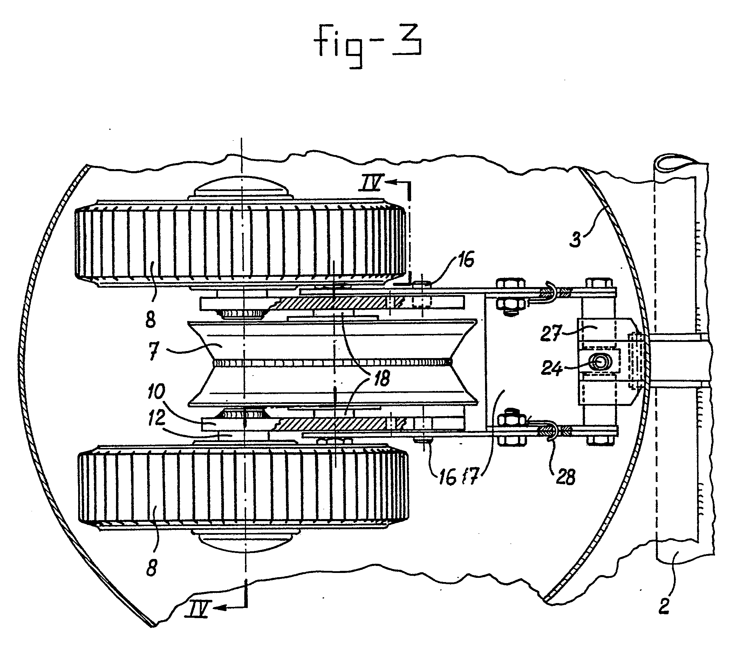

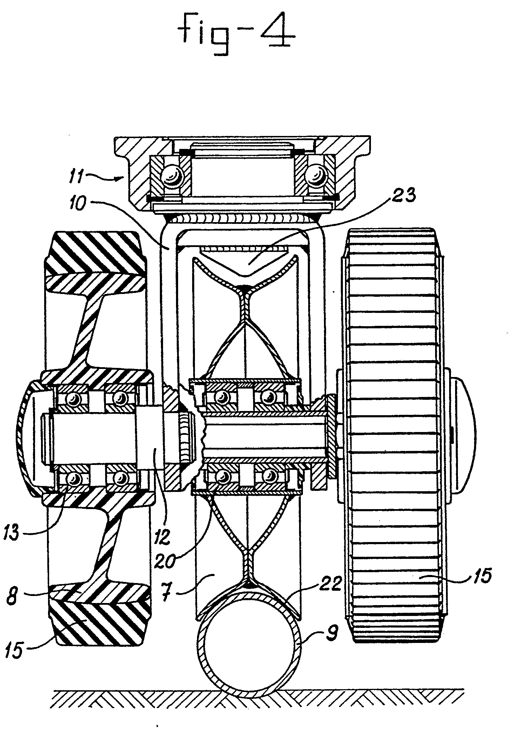

As shown in Figs. 2, 3 and 4, each truck 5, 6 comprises a fork assembly 10, mounted in the box 3 or 4 by means of a ball bearing 11. Outside of the fork assembly 10, two journals 12 are fixed, offset from the pivot of the truck. On these journals 12, the ground wheels 8, provided with rubber tires 15, are mounted by means of ball bearings 13.

In addition, by pivots 16, an auxiliary fork 17 is attached to the fork assembly 10, such auxiliary fork being capable of swinging on pivots 16. At one end of the auxiliary fork 17, a shaft 18 is secured, passing through oblong holes 19 in the fork assembly 10, on which in turn the rail wheel 7 is mounted by means of a ball bearing 20. The rail wheel 7 has a concave tread 22 so that the rail can partially envelope the tubular monorail 9. The fork assembly 10 has a stripper plate 23 welded to it, to clear the tread 22 of any dirt that may have been picked up by the rail wheel 7.

The other end of the auxiliary fork 17 is connected to the bolt 24 passing through an opening in plate 25. By swinging the auxiliary fork 17 upward, the bolt 24 can be made to project upward from the opening in the plate 25 and is received in the opening 26 of a receiving member 27 mounted on the housing 3 or 4 and capable of swinging upward. A tension spring 28 is arranged between the auxiliary fork 17 and the fork assembly 10.

Now when the wagon is run off the monorail 9, the weight of the rail wheels 7, now freely suspended, and the action of the spring 28, swing the auxiliary fork 17 so that the bolt 24 can drop into the opening 26. Depending on the position of the truck, the truck will then be locked. As soon as the wagon is again to serve as a rail vehicle, so that the two rail wheels will again assume the load, a slight rotation of the fork assembly 10 will release the lock, whereupon both trucks are again free to rotate, as is required in order to follow the rail 9 properly.

If it is desired to effect the release earlier, the rotatable receiving member 27 may be lifted.

## Claims

1. Wagon capable of traveling on a railway and on the ground, consisting of a chassis (1) on which are mounted, near the front and rear ends, wheels (7) for traveling on a railway, and, running parallel thereto, wheels (8) for traveling on the ground, characterized in that the wheels (7, 8) are mounted in trucks (5, 6), the wheels (8) for traveling on the ground being offset relative to the pivot of the truck (5, 6) in a direction perpendicular to the axles of the wheels (8), the wheels (7) for traveling on a railway being mounted in a fork (17) attached to the truck near one end thereof and being pivotably attached at a pivot (16) to a truck (5, 6) and swingable about said pivot (16) as the weight of the wagon is transferred from the rail-wheels (7) to the road-wheels (8), the other end of said fork (17) being connected to a locking means (24—27) which, as the said fork (17) swings upwardly, is capable of entering into engagement with at least one receiving member (27) attached to the chassis (1), so that the truck (5, 6) may be fixed in one or more positions relative to the said chassis (1).

2. Wagon according to claim 1, characterized in that each receiving member (27) is so arranged that the corresponding locking means (24—27) can enter into engagement therewith when the corresponding ground wheels (8) are directed inward in relation to the pivot of the truck (5, 6).

3. Wagon according to claim 1 or 2, characterized in that a spring (28) is arranged between the fork (17) and the truck (5, 6), tending to swing the fork (17) in the direction in which the locking means (24) can enter into engagement with the receiving member (27).

4. Wagon according to claims 1 to 3, characterized in that the locking means consists of a bolt (24) and the receiving member (27) of an opening (26) capable of receiving said bolt.

5. Wagon according to claim 4, characterized in that said opening (26) is arranged in a member (27) mounted on the chassis (1) and capable of swinging upward.

6. Wagon according to claims 1 to 5, characterized in that one rail wheel (7) only and a ground wheel (8) on either side of it are arranged in each truck.

7. Wagon according to claim 6, characterized in that said rail wheel (7) has a concave tread (22), enabling to drive the wagon on a rounded pipe or tube (9).

8. Wagon according to claim 7, characterized in that near the top of said rail wheel (7), a plate (23) projecting into the tread contour (22) with some clearance is mounted on the truck (5, 6).

## Revendications

1. Wagon capable de se déplacer sur une voie ferrée et sur le sol, consistant en un châssis (1) sur lequel sont montées, près des extrémités avant et arrière, des roues (7) pour un déplacement sur une voie ferrée et, tournant parallèlement à ces roues, des roues (8) pour un déplacement sur le sol, caractérisé par le fait que les roues (7, 8) sont montées dans des bogies (5, 6), les roues (8) pour un déplacement sur le sol étant décalées par rapport à l'axe d'articulation du bogie (5, 6) dans une direction perpendiculaire aux essieux des roues (8), les roues (7) pour un déplacement sur une voie ferrée étant montées dans une fourche (17) fixée au bogie près d'une de ses extrémités et etant fixées de façon pivotante à l'endroit d'un axe d'articulation (16) à un bogie (5, 6) et pouvant pivoter autour dudit axe d'articulation (16) lorsque le poids du wagon est transféré des roues (7) pour rail aux roues (8) pour route, l'autre extrémité de ladite fourche (17) étant reliée à un moyen de blocage (24—27) qui, lorsque ladite fourche (17) pivote vers le haut, peut s'engager dans au moins un élément récepteur (27) fixé au châssis (1) de manière que le bogie (5, 6) puisse être calé sur une ou plusieurs positions par rapport audit châssis (1).

2. Wagon suivant la revendication 1, caractérisé par le fait que chaque élément récepteur (27) est disposé de manière que le moyen de blocage correspondant (24—27) puisse être engagé dans ledit élément lorsque les roues pour sol correspondantes (8) sont dirigées vers l'intérieur par rapport à l'axe d'articulation du bogie (5, 6).

3. Wagon suivant la revendication 1 ou 2, caractérisé par le fait qu'un ressort (28) est disposé entre la fourche (17) et le bogie (5, 6) en ayant tendance à faire pivoter la fourche (17) dans la direction dans laquelle le moyen de blocage (24) peut être engagé dans l'élément récepteur (27).

4. Wagon suivant les revendications 1 à 3, caractérisé par le fait que le moyen de blocage est constitué par une cheville (24) et l'élément récepteur (27) par une ouverture (26) pouvant loger ladite cheville.

5. Wagon suivant la revendication 4, caractérisé par le fait que ladite ouverture (26) est placée dans un élément (27) monté sur le châssis (1) et capable de pivoter vers le haut.

6. Wagon suivant les revendications 1 à 5, caractérisé par le fait qu'une seule roue (7) pour rail et une roue (8) pour sol placée de part et d'autre de celle-ci sont disposées dans chaque bogie.

7. Wagon suivant la revendication 6, caractérisé par le fait que ladite roue (7) pour rail comporte une surface de roulement concave (22) permettant au wagon de rouler sur un tuyau ou tube rond (9).

8. Wagon suivant la revendication 7, caractérisé par le fait que près du sommet de ladite roue (7) pour rail, une plaque (23) faisant saillie jusque dans le contour (22) de la surface de roulement avec un certain espace libre est montée sur le bogie (5, 6).

**Patentansprüche**

1. Zum Fahren auf einer Schiene und auf dem Boden geeigneter Wagen mit einem Chassis (1), an welchem nahe dem vorderen und hinteren Ende Räder (7) zum Fahren auf einer Schiene und, parallel dazu laufend, Räder (8) zum Fahren auf dem Boden Montiert sind, dadurch gekennzeichnet, daß die Räder (7, 8) an Drehgestellen (5, 6) montiert sind, wobei die Räder (8) zum Fahren auf dem Boden jeweils mit Bezug auf die Drehachse des Drehgestells (5, 6) quer zu den Achsen der Räder (8) versetzt sind und die Räder (7) zum Fahren auf einer Schiene in einer an dem Drehgestell angebrachten Gabel (17) nahe deren einem Ende montiert und an einem Schwenklager (16) verschwenkbar mit einem Drehgestell (5, 6) verbunden und um dieses Schwenklager (16) schwenkbar sind, wenn das Gewicht des Wagens von den Schienen-Rädern (7) auf die Straßen-Räder (8) verlagert wird, und wobei das andere Ende der Gabel (17) mit einem Verriegelungsteil (24—27) verbunden ist, welches beim Aufwärtsschwenken der Gabel (17) mit einem am Chassis (1) angebrachten Halteglied (27) in Eingriff zu bringen ist, so daß das Drehgestell (5, 6) relativ zum Chassis (1) in einer oder mehreren Stellungen festlegbar ist.

2. Wagen nach Anspruch 1, dadurch gekennzeichnet, daß jedes Halteglied (27) so angeordnet ist, daß das zugeordnete Verriegelungsteil (24—27) damit in Eingriff zu bringen ist, wenn die zugeordneten Bodenräder (8) mit Bezug auf das Schwenklager des Drehgestells (5, 6) einwärts gerichtet sind.

3. Wagen nach Anspruch 1 oder 2, dadurch gekennzeichnet, daß zwischen der Gabel (17) und dem Drehgestell (5, 6) eine Feder (28) angeordnet ist, welche die Gabel (17) in diejenige Richtung zu schwenken bestrebt ist, in welcher das Verriegelungsteil (24) in Eingriff mit dem Halteglied (27) zu bringen ist.

4. Wagen nach den Ansprüchen 1 bis 3, dadurch gekennzeichnet, daß das Verriegelungsteil aus einem Bolzen (24) besteht und das Halteglied (27) aus einer zur Aufnahme des Bolzens geeigneten Öffnung (26).

5. Wagen nach Anspruch 4, dadurch gekennzeichnet, daß die Öffnung (26) in einem Teil (27) angebracht ist, welches am Chassis (1) gelagert und hochschwenkbar ist.

6. Wagen nach den Ansprüchen 1 bis 5, dadurch gekennzeichnet, daß an jedem Drehgestell nur ein Schienenrad (7) und ein Bodenrad (8) auf jeder von dessen Seiten angeordnet sind.

7. Wagen nach Anspruch 6, dadurch gekennzeichnet, daß das Schienenrad (7) eine konkave Lauffläche (22) hat, welche dazu befähigt, den Wagen auf einem gerundeten Rohr oder einer gerundeten Röhre (9) zu fahren.

8. Wagen nach Anspruch 7, dadurch gekennzeichnet, daß nahe dem oberen Bereich des Schienenrads (7) am Drehgestell (5, 6) eine mit Spalt in die Kontur der Lauffläche (22) hineinragende Platte (23) montiert ist.

## fig-1

## fig-2

fig-3

# fig-4